# EUROPEAN PATENT APPLICATION

(11) **EP 1 615 110 A2**
(43) Date of publication of application: **11.01.2006**
(21) Application number: 05000173.4
(22) Date of filing: 05.01.2005
(51) Int. Cl.: G06F 3/02

(54) **Keyboard and key seal**

(30) Priority: 06.07.2004 JP 2004199464
(71) Applicant: iFORCOM Co., Ltd., Tsukui-gun, Kanagawa (JP)
(72) Inventor: Saito, Masami, Tsukui-gun Kanagawa (JP)
(74) Representative: Betten & Resch

(57) **Abstract**

A keyboard having keys arranged thereon and large-sized characters each of which is continuously given over a top surface and a front surface of each key to be easily seen so that movements between a first line of sight on the keys and a second line of sight on a monitor are reduced to a minimum. A character may be placed on a plane under a transparent layer in a key to be seen through the transparent part. A key seal includes upper and front parts to be attached to top and front surfaces of a key.

## Description

### BACKGROUND OF THE INVENTION

The present invention relates to a keyboard having a plurality of keys for use in inputting information into a personal computer or the like and a key seal to be attached to the keys of the keyboard.

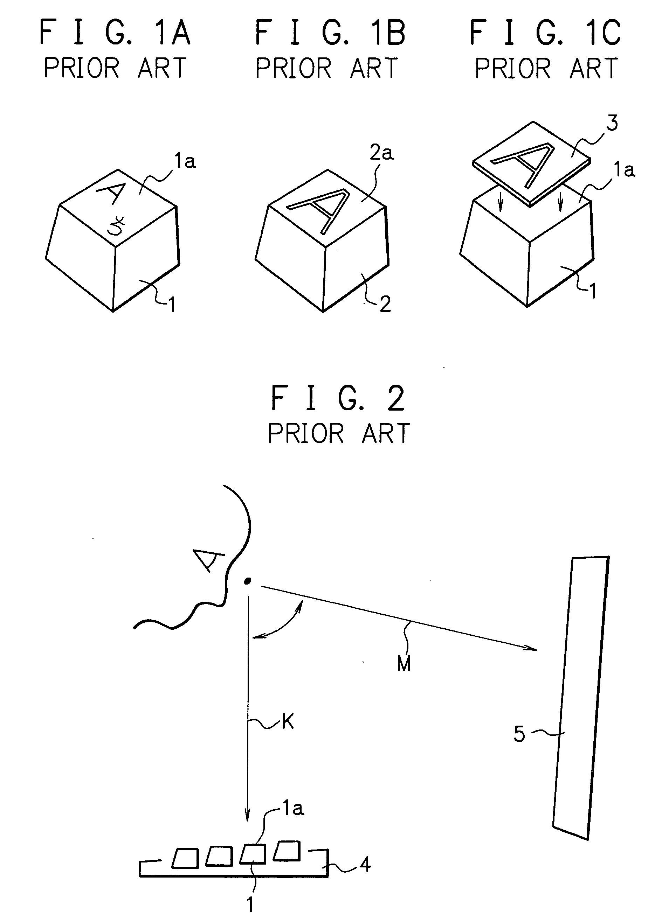

As well known, a keyboard having a plurality of keys arranged thereon has been used for carrying out an input operation of information into a personal computer or the like. Figs. 1A, 1B and 1C illustrate some keys used for a conventional keyboard. In Fig. 1A, proper characters are given on a top (key top) surface 1a of a key 1. For a person with weak eyesight or an aged person, as shown in Fig. 1B, a large-sized character is given on a top surface 2a of a key 2 to obtain an easily seen interchangeable key. As shown in Fig. 1C, a large-sized character key seal 3 to be attached to a top 1a of a usual key 1 has also been proposed.

As described above, the character or characters are given only on the top surface 1a of the conventional key 1. Hence, when a beginner who is not accustomed to a touch typing for operating a keyboard 4 looks for the desired character, he looks at the keyboard 4 from directly above as shown in Fig. 2. That is, the operator often takes a key touch typing posture to cover the keyboard 4 while seeking for the characters. When the operator types the keys 1 of the keyboard 4 in a posture looking at the keys 1 of the keyboard 4 from directly above, he/she must turn his/her sight line K on the keys 1 of the keyboard 4 to his/her sight line M on a monitor 5 and in the opposite direction, causing his/her sight lines K and M to move up and down largely. Hence, his whole head moves largely as well and his/her sight lines become unstable. As a result, the key touch input operation becomes laborious and burdensome for the operator.

Further, as described above, in the case of the conventional interchangeable key 2 with a large-sized character or the conventional large-sized character key seal 3, the large-sized character is given only on the top surface 2a or 1a of the key 2 or 1. Therefore, although the large-sized character becomes easy-to-see, the operator's sight line on the key 2 or 1 is not changed and is still cast from directly above. Hence, the large-sized character of the key cannot improve readiness of the key touch input operation because of the same aforementioned reason.

### SUMMARY OF THE INVENTION

It is therefore an object of the present invention to provide a keyboard in view of the aforementioned disadvantages of the prior art, which is capable of improving an easy-to-see property and readiness of a key touch input operation considering a key touch input posture of an operator with respect to a keyboard.

It is another object of the present invention to provide a key seal to be attached to keys of a keyboard, which is capable of improving an easy-to-see property and readiness of a key touch input operation considering a key touch input posture of an operator with respect to a keyboard.

In accordance with one aspect of the present invention, there is provided a keyboard comprising a plurality of keys arranged in predetermined positions, and characters each of which is continuously given over a top surface and a front surface of each key.

In accordance with another aspect of the present invention, there is provided a keyboard comprising a plurality of keys arranged in predetermined positions, and characters each of which is given on a plane within each key and is seen through a transparent part, the plane slanting downward to its front.

In accordance with a further aspect of the present invention, there is provided a key seal to be attached to keys arranged on a keyboard, comprising an upper part to be attached to a top surface of each key, and a front part to be attached to a front surface of each key, the upper part and the front part being integrally produced to give a character over the upper part and the front part continuously.

A key seal preferably further comprises a peel-off film laminated on an upper surface of the upper part, and the peel-off film includes a projection part for grasping at its front end.

In the keyboard of the first aspect, the character is given over the top surface and the front surface of the key and hence the character can be given in larger size than one given only on a top surface of a conventional key to improve its easy-to-see efficiency Furthermore, the keyboard of the present invention is characterized in that the character is continuously given over the top surface and the front surface of the key. Hence, a posture in a key touch input operation can be naturally or automatically adjusted so as to look at the keys of the keyboard from its slanting upper front position, and the characters of the keys can be exactly seen in this posture. Accordingly, the keyboard can be separated far from the operator, and a movement between a first line of sight toward the keys of the keyboard and a second line of sight toward a monitor can be reduced to a minimum without disturbing a posture in a key touch input operation of an operator. As a result, a laborious and oppressive key touch input operation of the operator is largely improved. Further, according to the present invention, the character lying on the key can be changed without changing a shape and a structure of a conventional key and hence a cost for the improvement can be effectively reduced.

In the keyboard of another aspect, the character given on the character laying plane located within the key can be seen through the transparent upper part. Further, the character laying plane of the base part of the key slants downward to its front and has a larger area than that of a top surface of a conventional key and hence a larger-sized character can be given on the slant character laying plane of the base part to improve its easy-to-see efficiency. Furthermore, the keyboard of the present invention is characterized in that the character is given on the character laying plane slanting to its front. Hence, a posture in a key touch input operation can be naturally or automatically adjusted so as to look at the keys of the keyboard from its slanting upper front position, and the characters of the keys can be exactly seen in this posture. Hence, the keyboard can be separated far from the operator, and movements of a sight line between the keys on the keyboard and a monitor can be reduced to minimum without disturbing a posture in a key touch input operation of an operator. As a result, a pain and a burden in the key touch input operation of the operator are largely reduced. Further, according to the present invention, the character laying plane is arranged aslant within the key and the character can be easily seen even in the case of a relatively thin key.

In the key seal of a further aspect, the upper part to be attached to the top surface of the key and the front part to be attached to the front surface of the key are integrally produced in the key seal and a larger-sized character is continuously given over the upper part and the front part of the key seal. Hence, by attaching the key seal to keys of a conventional keyboard, the conventional keyboard having usual keys can be readily improved to obtain the key and the keyboard of the first aspect of the present invention with the result of the same effects as those described above.

In the preferable key seal, the transparent peel-off thin film laminated on the upper surface of the upper part of the key seal is provided with the front projection part for grasp at its front end. In the attaching operation of the key seal to the key, by grasping the front projection part of the transparent peel-off thin film, in particular, the front part of the key seal can be readily attached to the front surface of the key in a narrow space from the adjacent keys.

### BRIEF DESCRIPTION OF THE DRAWINGS

The objects, features and advantages of the present invention will become more apparent from the consideration of the following detailed description, taken in conjunction with the accompanying drawings, in which:
Figs. 1A, 1B and 1C are perspective views of keys for use in a conventional keyboard;
Fig. 2 is a schematic conceptual view for showing positional relationship among a conventional keyboard, a monitor and an operator to input information into a personal computer or the like;
Figs. 3A and 3B are perspective view and side view to show a key used for a keyboard according to a preferred embodiment of the present invention;
Fig. 4 is a schematic conceptual view for showing positional relationship among a keyboard according to a preferred embodiment of the present invention, a monitor and an operator to input information into a personal computer or the like;
Figs. 5A and 5B are perspective view and side view to show a key used for a keyboard according to another embodiment of the present invention;
Figs. 6A and 6B are exploded perspective view and vertical sectional view to show an entire key seal to be attached to keys according to a further embodiment of the present invention;
Figs. 7A, 7B and 7C are perspective views for showing an operation for attaching the key seal shown in Figs. 6A and 6B to a key;
Fig. 8 is a top view of one embodiment of a character design of a set of key seals exemplified by the seal shown in Figs. 6A and 6B; and
Fig. 9 is a top view of another embodiment of a character design of another set of key seals exemplified by the seal shown in Figs. 6A and 6B.

### DESCRIPTION OF THE PREFERRED EMBODIMENT(S)

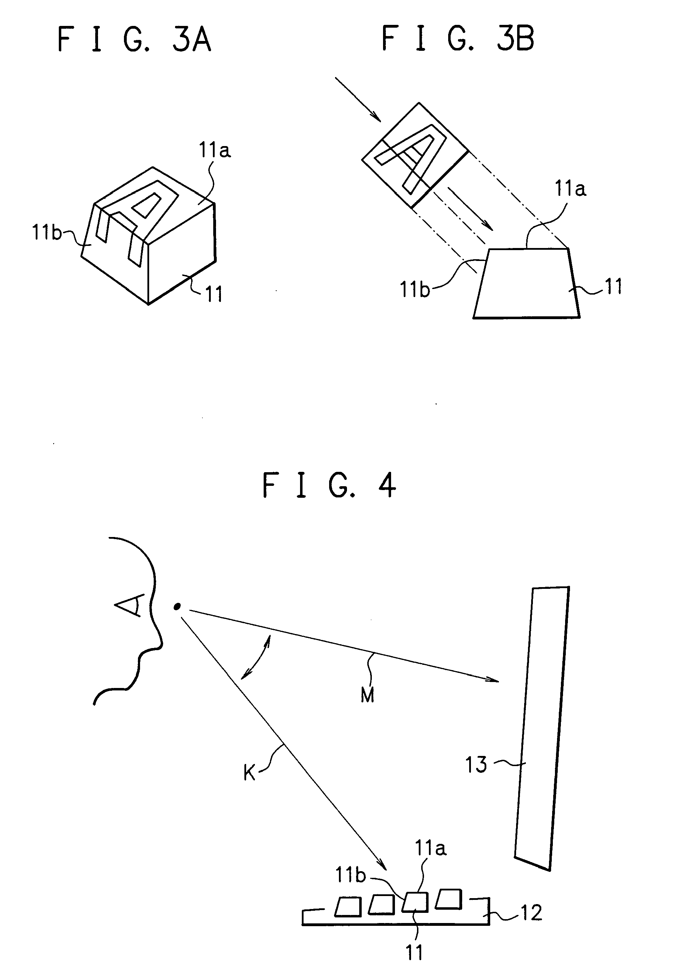

Referring now to the drawings, there is shown in Figs. 3A and 3B a key used for a keyboard according to one embodiment of the present invention, and Fig. 4 shows a positional relationship among a keyboard having a plurality of keys arranged thereon according to one embodiment of the present invention, a monitor and an operator to input information into a personal computer or the like.

In Figs. 3A and 3B, one or at least two characters (including symbols and the like) are continuously shown in a large-size, compared with a usual font size, over a top surface 11a and a front surface 11b of a key 11. That is, the lower part of the character is extended over the front surface 11b of the key 11. In this case, it is preferable that the given area of the lower part of the character over the front surface 11b of the key 11 is restricted to approximately its upper half area so that the lower part of the character extended over the front surface 11b may not be covered by other keys arranged in front of that key 11. A shape and a structure of the key 11 can be the same as or similar to a conventional key and a producing method of the character can be made by the same or a similar printing or inscribing as a conventional method.

In this embodiment, the character is given over the top surface 11a and the front surface 11b of the key 11 and hence the character can be given in a larger size than one limited only on a top surface of a conventional key to improve its easily seen efficiency or property

Furthermore, in this embodiment, the keyboard 12 of the present invention is characterized in that the character is continuously given over the top surface 11a and the front surface 11b of the key 11. Hence, as shown in Fig. 4, a posture in a key touch input operation can be naturally or automatically adjusted so as to look at the keys 11 of the keyboard 12 diagonally from the upper front of the keyboard, and the characters of the keys 11 can be unmistakably seen in this posture. Accordingly, the keyboard 12 can be separated far from the operator, and movements between a sight line K on the keys 11 of the keyboard 12 and a sight line M on a monitor 13 can be reduced to a minimum without disturbing operator's posture in a key touch input operation.

In this case, when the key 11 is seen from its slanting upper front position, the character is somewhat distorted by an angle difference between the top surface 11a and the front surface 11b of the key 11 and hence it is preferable to design the character of the key 11 so as to reduce its distortion to a minimum. Conversely, by using such designed character, when the key 11 is seen from its directly upper position, the character of the key 11 is seen in a more distorted shape and the operator feels odd with a character designed like that. As a result, the posture in the key touch input operation can naturally or automatically be adjusted so that the operator may look at the key 11 from its slanting upper position.

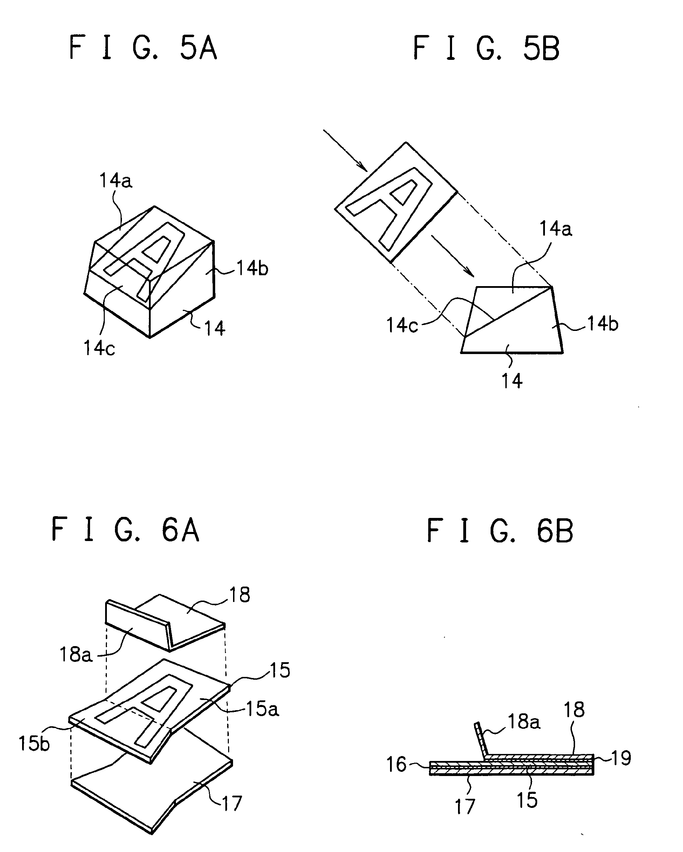

In Figs. 5A and 5B, there is shown a key used for a keyboard according to another embodiment of the present invention.

In Figs. 5A and 5B, a key 14 includes a transparent upper part 14a and a base part 14b and a large-sized character is given on a slant upper surface as a character laying plane 14c of the base part 14b, the slant character laying plane 14c slanting downwards from a top of a rear surface of the key 14 to an intermediate height of a front surface of the key 14. The transparent upper part 14a made of a transparent synthetic resin material or the like is mounted on the slant character laying plane 14c of the base part 14b of the key 14.

In this case, the character given on the character laying plane 14c located within the key 14 can be seen through the transparent upper part 14a. Further, as described above, the character laying plane 14c of the base part 14b of the key 14 slants to its front and has a larger area than that of a top surface of a conventional key and hence a larger-sized character can be given on the slant character laying plane 14c of the base part 14b to improve its easy-to-see efficiency or property.

Furthermore, in this embodiment, the keyboard 12 of the present invention is characterized in that the character is given on the character laying plane 14c slanting downward to its front. Hence, in the same manner as the key 11 shown in Fig. 4, a posture in a key touch input operation can be naturally or automatically adjusted so as to look at the keys 11 of the keyboard 12 from its slanting upper front position, and the characters of the keys 11 can be correctly seen in this posture. Hence, the keyboard 12 can be separated far from the operator, and a movement between a sight line K on the keys 11 of the keyboard 12 and a sight line M on a monitor 13 can be reduced to a minimum without disturbing a posture in a key touch input operation of an operator. In the key 14, the slant angle and the height of the character laying plane 14c of the base part 14b can be properly determined depending on the thickness of the key 14.

In Figs. 6A and 6B, there is shown a key seal to be attached to keys of a keyboard according to a further embodiment of the present invention. Fig. 6A is an exploded perspective view of a key seal 15 to be attached to a key and Fig. 6B is a vertical sectional view of the whole key seal 15.

In Figs. 6A and 6B, the key seal 15 includes an upper part 15a to be attached to a top surface 1a of a usual key 1 and a front part 15b to be attached to a front surface 1b of the key 1. The upper part 15a and the front part 15b are integrally produced by a thin film or sheet material such as a plastic material, for example, a vinyl material or the like, a paper material and a metal material, and a large-sized character can be integrally given over the upper part 15a and the front part 15b of the key seal 15. The front part 15b of the key seal 15 is formed in a trapezoid shape in conformity with the front surface 1b of the key 1 and can be shaped in a rectangle having the same width as the upper part 15a. The key seal 15 further includes a strong sticky layer 16 on its lower surface to obtain a self-adhesive key seal and is attached to a peel-off mount sheet 17 via the strong sticky layer 16. A transparent peel-off thin film 18 having a weak sticky layer 19 on its lower surface is laminated on an upper surface of the upper part 15a of the key seal 15 via the weak sticky layer 19. The transparent peel-off thin film 18 also includes a front projection part 18a having no weak sticky layer on its lower surface. When the transparent peel-off thin film 18 is laminated on the upper part 15a of the key seal 15, the front projection part 18a for grasp projects apart from the front part 15b of the key seal 15. The transparent peel-off thin film 18 can be readily peeled off the upper part 15a of the key seal 15 by pulling the front projection part 18a picked up using fingers.

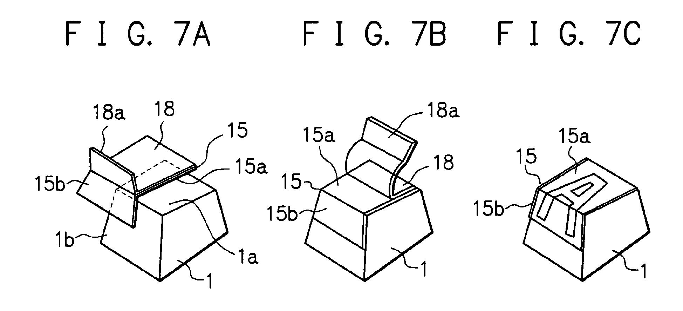

In Figs. 7A, 7B and 7C, there is shown an attaching operation of the key seal 15 shown in Figs. 6A and 6B to the key 1.

First, as shown in Fig. 7A, the key seal 15 with the transparent peel-off thin film 18 is peeled off the peel-off mount sheet 17 and the front part 15b of the key seal 15 is attached to the front surface 1b of the key 1 by picking up the front projection part 18a of the transparent peel-off thin film 18 using the fingers. In Fig. 7B, the upper part 15a of the key seal 15 is attached to the top surface 1a of the key 1. Thereafter, the transparent peel-off thin film 18 is peeled off the upper part 15a of the key seal 15 by picking up the front projection part 18a using the fingers to complete the attaching of the upper and front parts 15a and 15b of the key seal 15 to the top and front parts 1a and 1b, respectively, of the key 1, as shown in Fig. 7C.

In this embodiment, as described above, the upper part 15a to be attached to the top surface 1a of the key 1 and the front part 15b to be attached to the front surface 1b of the key 1 are integrally produced in the key seal 15 and a larger-sized character is continuously given over the upper part 15a and the front part 15b of the key seal 15. Hence, by attaching the key seal 15 to keys 1 of a conventional keyboard 4, the conventional keyboard 4 having ordinary keys 1 can be readily improved to obtain the key 11 and the keyboard 12 according to one embodiment of the present invention, as described above in connection with Figs. 3A and 3B and Fig. 4, with the result of the same effects as those described above.

In the case of a conventional key seal to be attached to a top surface 1a of a key 1, a usual simple key seal can be properly used. In the case of the key seal 15 to be attached to a top surface 1a and a front surface 1b of a key 1 in the embodiment of the present invention, when the key seal 15 is attached to keys undechable from a keyboard, particularly, attaching the seal to a front surface 1a of a key 1 with narrow space from adjacent keys is somewhat troublesome. In such a case, as described in the embodiment, the transparent peel-off thin film 18 laminated on the upper surface of the upper part 15a of the key seal 15 is provided with the front projection part 18a for grasping at its front end. In the attaching operation of the key seal 15 to the key 1, by grasping the front projection part 18a of the transparent peel-off thin film 18, in particular, the front part 15b of the key seal 15 can be readily attached to the front surface 1b of the key 1 with the narrow space from the adjacent keys without the strong sticky layer 16 of the key seal 15 stuck to finger tips of an operator.

Further, usually, an "F" key, a "J" key and a "5" key are provided with projections of a finger position marking on its upper surface. In the case of the key seal 15 of this embodiment, the key seal 15 can be provided with a projection produced by using a synthetic resin material or the like on the surface of the key seal 15 or by a partly thickened portion of the key seal 15.

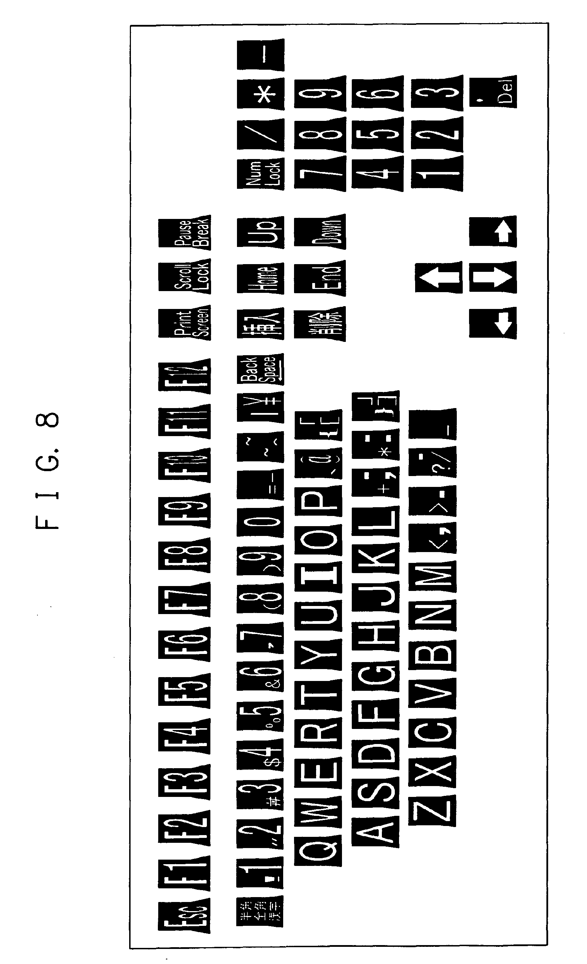

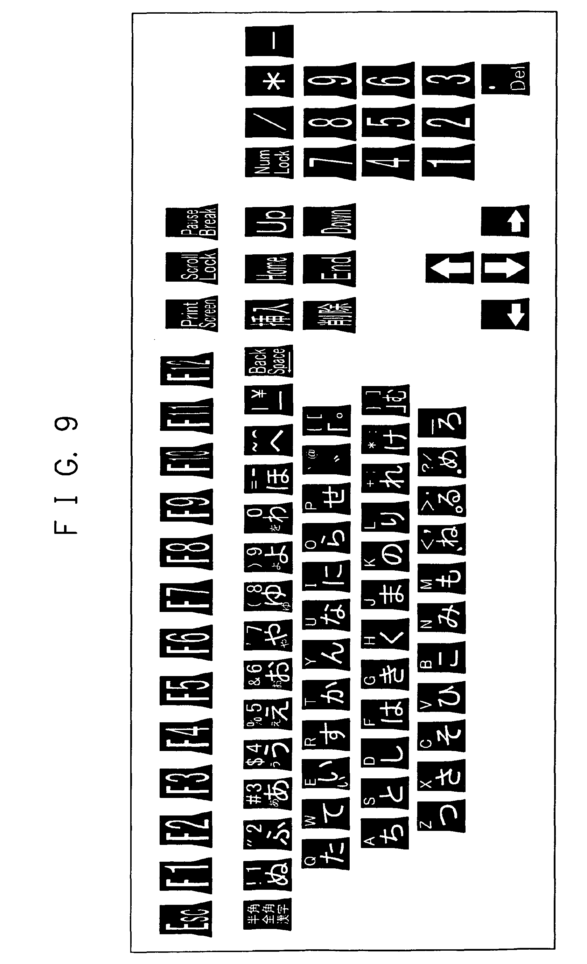

In Fig. 8 and Fig. 9, there are shown two embodiments of a character design of a set of key seals, as exemplified by the seal shown in Figs. 6A and 6B. Fig. 8 illustrates a character design of one set of key seals of alphabetical characters, and Fig. 9 another set of key seals of a combination of alphabetical and Kana characters. A person with a weak sight usually sees white characters on a black ground easier than usual black characters on a white ground and hence such white characters on a black ground are designed for the keys, as shown in Fig. 8 and Fig. 9. The peel-off mount sheet can be attached to every key seal or a plurality of key seals can be arranged on one large peel-off mount sheet. In the preferable embodiments shown in Fig. 8 and Fig. 9, a plurality of key seals are arranged corresponding to an arrangement of a plurality of keys of a keyboard. Hence, these key arrangements with the characters can be readily understood as one example of a keyboard having a plurality of keys arranged thereon in the embodiment described above with reference to Figs. 3A and 3B and Fig. 4.

While the present invention has been described with reference to the particular illustrative embodiments, it is not to be restricted by those embodiments but only by the appended claims. It is to be appreciated that those skilled in the art can change and modify the embodiments without departing from the scope and spirit of the present invention. In the keys of the keyboard and the key seals of the present invention, naturally, the key character improvement can be applied to either a part or the whole of the keys of the keyboard. For instance, only the character keys used for inputting the characters can be improved.

## Claims

1. A keyboard comprising a plurality of keys arranged in predetermined positions, and characters each of which is continuously given over a top surface and a front surface of each key.

2. A keyboard comprising a plurality of keys arranged in predetermined positions, and characters each of which is given on a plane within each key and is seen through a transparent part, the plane slanting downward to its front.

3. A key seal to be attached to keys arranged on a keyboard, comprising an upper part to be attached to a top surface of each key, and a front part to be attached to a front surface of each key, the upper part and the front part being integrally produced to give a character over the upper part and the front part continuously.

4. A key seal of claim 3, further comprising a peel-off film laminated on an upper surface of the upper part, the peel-off film including a projection part for grasping at its front end for grasp.
